# EUROPEAN PATENT APPLICATION

(11) **EP 4 664 842 A1**
(43) Date of publication of application: **17.12.2025**
(21) Application number: 23920405.0
(22) Date of filing: 08.02.2023
(51) Int. Cl.: H04L 41/16, H04W 24/08

(54) **AI MODEL PERFORMANCE MONITORING METHOD AND APPARATUS, NETWORK NODE, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2023/075077
(87) International publication number: WO 2024/164197

(57) **Abstract**

The present disclosure relates to an AI model performance monitoring method and apparatus, a network node, and a storage medium. The method comprises: for a specific parameter, acquiring prediction data output by an activated AI model and real data; and determining performance information of the AI model according to the prediction data and the real data, wherein the performance information of the AI model is used for determining a control instruction for controlling the state of the AI model. According to the present disclosure, the performance of an AI model deployed in a communication system can be monitored, and a specific performance monitoring method is provided.

## Description

### TECHNICAL FIELD

The present disclosure relates to the field of communication technologies, and in particular, to an AI model performance monitoring method and apparatus, a network node, and a storage medium.

### BACKGROUND

In a communication system, an artificial intelligence (AI) model may be deployed in a network node, and prediction and inference are performed by the AI model, to improve performance of the communication system.

### SUMMARY

To solve problems in the related arts, embodiments of the present disclosure provide an AI model performance monitoring method and apparatus, a network node and a storage medium.

A first aspect of embodiments of the present disclosure provides an AI model performance monitoring method, including:
acquiring predicted data corresponding to an activated AI model and actual data; and
determining performance information of the AI model according to the predicted data and the actual data.

A second aspect of the embodiments of the present disclosure provides an AI model performance monitoring apparatus, including:
an acquiring module, configured to acquire predicted data corresponding to an activated AI model and actual data; and
a determining module, configured to determine performance information of the AI model according to the predicted data and the actual data.

A third aspect of the embodiments of the present disclosure provides a network node, including:
a processor;
a memory for storing a processor-executable instruction;
where the processor is configured to execute the executable instruction to implement steps of the AI model performance monitoring method according to the first aspect of the present disclosure.

A fourth aspect of the embodiments of the present disclosure provides a computer-readable storage medium, storing a computer program instruction, where when the program instruction is executed by a processor, steps of the AI model performance monitoring method according to the first aspect of the present disclosure are implemented.

In the above technical solution, predicted data corresponding to an activated AI model and actual data are acquired; and performance information of the AI model is determined according to the predicted data and the actual data. According to the present disclosure, the performance of an AI model deployed in a communication system can be monitored, and a specific performance monitoring method is provided.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram of a communication system to which an AI model performance monitoring method is applicable according to an example embodiment.
FIG. 2 is a flowchart of an AI model performance monitoring method according to an example embodiment.
FIG. 3 is a flowchart of an AI model performance monitoring method according to an example embodiment.
FIG. 4 is a flowchart of an AI model performance monitoring method according to an example embodiment.
FIG. 5 is a flowchart of an AI model performance monitoring method according to an example embodiment.
FIG. 6 is a flowchart of an AI model performance monitoring method according to an example embodiment.
FIG. 7 is a flowchart of an AI model performance monitoring method according to an example embodiment.
FIG. 8 is a flowchart of an AI model performance monitoring method according to an example embodiment.
FIG. 9 is a flowchart of an AI model performance monitoring method according to an example embodiment.
FIG. 10 is a flowchart of an AI model performance monitoring method according to an example embodiment.
FIG. 11 is a flowchart of an AI model performance monitoring method according to an example embodiment.
FIG. 12 is a flowchart of an AI model performance monitoring method according to an example embodiment.
FIG. 13 is a flowchart of an AI model performance monitoring method according to an example embodiment.
FIG. 14 is a flowchart of an AI model performance monitoring method according to an example embodiment.
FIG. 15 is a flowchart of an AI model performance monitoring method according to an example embodiment.
FIG. 16 is a flowchart of an AI model performance monitoring method according to an example embodiment.
FIG. 17 is a flowchart of an AI model performance monitoring method according to an example embodiment.
FIG. 18 is a block diagram of an AI model performance monitoring apparatus according to an example embodiment.
FIG. 19 is a block diagram of a network node according to an example embodiment.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The implementations set forth in the following description of example embodiments do not represent all implementations consistent with the present disclosure. Instead, they are merely examples of apparatuses and methods consistent with aspects related to the present disclosure as recited in the appended claims.

It can be understood that "a plurality of" in the present disclosure refers to two or more, and other quantifiers are similar thereto. "And/or" describes an association relationship between associated objects, indicating that there may be three possible relationships, for example, A and/or B may indicate three possible cases: A exists alone, both A and B exist, and B exists alone. The character "/" generally indicates an "or" relationship between the associated objects. The singular forms "a", "said" and "the" are also intended to include plural forms, unless the context clearly indicates otherwise.

It may be further understood that terms such as "first" and "second" are used to describe various information, but the information should not be limited to these terms. These terms are only used to distinguish one type of information from another, and do not indicate a specific order or importance. Actually, expressions such as "first" and "second" may be used interchangeably.

It can be further understood that although the operations are described in a specific order in the drawings in the embodiments of the present disclosure, they should not be understood as requiring these operations to be performed in the specific order shown or in a serial order, or requiring all the operations shown to be performed to obtain a desired result. In certain circumstances, multitasking and parallel processing may be advantageous.

It should be noted that all actions of acquiring signals, information or data in the present disclosure are performed under the premise of complying with the corresponding data protection regulation policy of the local country and being authorized by the corresponding device owner.

In related arts, even if an AI model is deployed in a communication system, the communication system may have a problem of trivial performance improvement. The applicant finds in long-term research that this may be caused by continued use of an AI model with poor performance, and therefore, in the embodiments of the present disclosure, it is proposed to monitor the performance of the AI model deployed in the communication system, and a specific performance monitoring method is provided. In such way, the corresponding AI model may then be deactivated based on the monitored performance of the AI model.

The following first describes an implementation environment of the embodiments of the present disclosure.

The technical solutions in the embodiments of the present disclosure may be applied to network nodes in various communication systems. The communication system may include one or more of a 4G (fourth generation) communication system, a 5G (fifth generation) communication system, and another future wireless communication system (for example, 6G). The communication system may alternatively include one or more of a public land mobile network (PLMN) network, a non-terrestrial network communication system, a device to device (D2D) communication system, a machine to machine (M2M) communication system, an Internet of Things (IoT) communication system, a vehicle to everything (V2X) communication system, or another communication system.

The network node in the communication system may be, for example, a user equipment (UE), a base station, a location management function (LMF) node, an operation administration and maintenance (OAM) node, a server, or another network node in the communication system. An AI model may be deployed in any network node for corresponding prediction and inference tasks.

For example, in a beam management process, the UE or the base station obtains an optimal beam through inference by using an AI model, so that the UE can reduce a quantity of to-be-measured beams.

For another example, in a CSI (channel state information) reporting process, the UE may compress a CSI measurement result by using an AI model, and report a compressed CSI measurement result to the base station. The base station restores it into an original CSI measurement result through the AI. This reduces a quantity of signaling bits required in a reporting process.

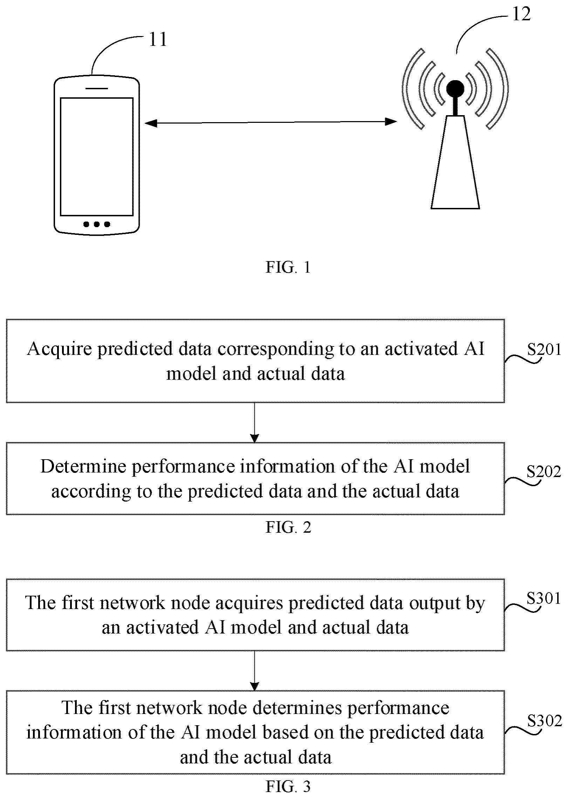

FIG. 1 is a schematic diagram of a communication system according to an example embodiment. As shown in FIG. 1, the communication system may include a UE 11 and a network device 12. The communication system may be configured to support a 4G network access technology, for example, a long term evolution (LTE) access technology, or a 5G network access technology, for example, a new radio access technology (New RAT), or another future wireless communication technology. It should be noted that, in the communication system, there may be one or more network devices 12 and one or more UE 11, and a quantity of network devices 12 and a quantity of terminal devices 11 in the communication system shown in FIG. 1 are merely adaptive examples, which is not limited in the present disclosure.

The network device 12 in FIG. 1 may be configured to support access to one or more UE 11, for example, the network device 12 may be an evolved NodeB (eNB or eNodeB) in LTE; the network device 12 may also be a next generation NodeB (gNB or gNodeB) in a 5G network; the network device 12 may also be a radio access network (NG Radio Access Network, NG-RAN) device in a 5G network; the network device 12 may also be a base station, a broadband network gateway (BNG), an aggregation switch, or a non-3GPP (3rd Generation Partnership Project) access device in a future evolved public land mobile network (PLMN).

Optionally, the network device 12 in the embodiments of the present disclosure may include various types of base stations, for example, a macro base station, a micro base station (also referred to as a small station), a relay station, an access point, a 5G base station or a future base station, a satellite, a transmitting and receiving point (TRP), a transmitting point (TP), a mobile switching center, a device to device (D2D), a machine to machine (M2M), an Internet of Things (IoT), a vehicle to everything (V2X) or other devices that undertake a base station function, etc., which is not specifically limited in the embodiments of the present disclosure. For ease of description, in all embodiments of the present disclosure, the devices providing the wireless communication function for the UE 11 are collectively referred to as the network device 12 or the base station.

It should be noted that, in the embodiments of the present disclosure, the network device may be a location server or a serving base station.

The UE 11 in FIG. 1 may be an electronic device that provides voice or data connectivity, for example, a terminal and an automobile in intelligent transportation, a household device in a smart home, a power meter reading instrument in a smart grid, a voltage monitoring instrument, an environment monitoring instrument, a video monitoring instrument in an intelligent security network, or a cash register. Of course, other UE 11 are also possible. The UE 11 may interact with the network device 12, and some UE 11 may also interact with each other.

The AI model may be deployed in both the UE 11 and the network device 12 in the communication system shown in FIG. 1. In addition, both the UE 11 and the network device 12 in the communication system shown in FIG. 1 may perform the AI model performance monitoring method in the embodiments of the present disclosure. It should be noted that the AI model performance monitoring method according to the embodiments of the present disclosure may be performed by the UE 11 alone, or may be performed by the network device 12 alone, or may be performed partially by the UE 11 and partially by the network device 12.

It should be noted that the network node included in the communication system shown in FIG. 1 is merely an example, and in some other examples, the communication system may alternatively include one or more of network nodes such as UE, a base station, and an LMF.

FIG. 2 is a flowchart of an AI model performance monitoring method according to an example embodiment. As shown in FIG. 2, the method includes following steps S201 and S202.

In step S201, acquiring, for a specific parameter, predicted data output by an activated AI model and actual data.

In step S202, determining performance information of the AI model according to the predicted data and the actual data, where the performance information of the AI model is used to determine a control instruction for controlling a state of the AI model.

It may be understood that the AI model may be used for inference prediction to acquire predicted data. The predicted data refers to predicted result data of a specific parameter type output after the activated AI model performs prediction according to the input data. The actual data refers to data of a specific parameter type actually collected by means of measurement. Therefore, in the embodiments of the present disclosure, the predicted data output by the activated AI model and the actual data may be acquired for the specific parameter.

In some implementations, the specific parameter includes at least one of following parameter types: an identifier of a beam with best channel quality, RSRP (reference signal receiving power) of a beam with best channel quality, RSRQ (reference signal receiving quality) of a beam with best channel quality, SINR (signal to interference plus noise ratio) of a beam with best channel quality, a geographical location of the first network node, RSRP measured by the first network node, RSRQ measured by the first network node, SINR measured by the first network node, a handover target cell status, a data arrival time, or a downlink data arrival status.

Optionally, the handover target cell status may include two cases: a handover target cell and a non-handover target cell.

Optionally, the downlink data arrival status may include two cases: downlink data arrives and no downlink data arrives.

In some embodiments, in order to make the performance monitoring more persuasive, there may be time correspondence between the predicted data and the actual data. Therefore, the mutually corresponded predicted data output by the activated AI model and the actual data of the specific parameter type are acquired in step S201.

In an embodiment of the present disclosure, the network node may acquire the predicted data of the specific parameter type output by the activated AI model and the actual data of the specific parameter type, and then may determine the performance information of the AI model according to the predicted data and the actual data of the specific parameter type, where the performance information is used to determine the control instruction for controlling the state of the AI model.

In some implementations, there may be a plurality of AI models that can output the predicted data of the specific parameter, that is, there may be a plurality of AI models with a same function, and specific model parameters may be different, for example, to adapt to different external environments, so that predicted data with certain difference is predicted by different AI models, and in this case, a control instruction for deactivating one of the AI models may be generated according to information, so that AI models that do not meet a requirement may be screened out, and AI models that meet the requirement as much as possible in a current environment is selected for continued use.

In some implementations, the network node performing step S201 and the network node performing step S202 may be a same network node, and the network node may be a first network node on which the activated AI model is deployed, or may be a second network node on which the activated AI model is not deployed. Optionally, both the first network node and the second network node may be any network node in a communication system, for example, UE (User Equipment), a base station, an LMF (Location Management Function) node, an OAM (Operation Administration and Maintenance) node, a server, or another network node in the communication system.

In some implementations, when the network node performing step S201 and the network node performing step S202 are the first network node on which the activated AI model is deployed, the first network node may perform step S201 and step S202.

In some implementations, when the network node performing step S201 and the network node performing step S202 are the second network node on which the activated AI model is not deployed, the second network node may receive the predicted data and the actual data that are sent by the first network node and that are acquired by the first network node, so that the second network node performs step S201, and the second network node further performs step S202.

In some other implementations, the network node performing step S201 and the network node performing step S202 may not be the same network node. For example, the first network node on which the activated AI model is deployed may perform step S201, and then the first network node sends the acquired predicted data and actual data to the second network node, so that the second network node may perform step S202.

It may be understood that the predicted data corresponding to the activated AI model and the actual data may be acquired by the network node on which the AI model is deployed, regardless of whether step S201 and step S202 are performed by a same network node or by different network nodes, or whether the network node performing the steps is a network node on which the activated AI model is deployed or a network node on which the activated AI model is not deployed.

According to the foregoing technical solution, predicted data corresponding to an activated AI model and actual data are acquired; and performance information of the AI model is determined based on the predicted data and the actual data, where the performance information of the AI model is used to determine a control instruction for controlling a state of the AI model. It is proposed that performance of an AI model deployed in a communication system can be monitored, and a specific performance monitoring method is proposed, so that a state of a corresponding AI model can be then controlled based on the monitored performance of the AI model, for example, the corresponding AI model is deactivated.

In an embodiment of the present disclosure, the network node on which the AI model is deployed may be considered a first network node, and details of acquiring, by the first network node, the predicted data output by the activated AI model and the actual data will be described below.

In some implementations, the AI model is deployed in the first network node, and the predicted data and/or the actual data are/is periodically acquired by the first network node based on a first period.

That is, in an embodiment of the present disclosure, the first network node may periodically acquire the predicted data of the activated AI model deployed thereon and/or the actual data according to the first period.

In an embodiment of the present disclosure, when the predicted data is periodically acquired according to the first period, the actual data may be acquired in real time, so as to ensure that corresponding actual data always exists when the predicted data is acquired. In addition, when the actual data is periodically acquired based on the first period, the predicted data may be acquired in real time, to ensure that corresponding predicted data always exists when the actual data is acquired.

In some other implementations, the AI model is deployed in the first network node, and the predicted data and/or the actual data are/is acquired by the first network node in response to meeting a first condition.

That is, in an embodiment of the present disclosure, the first network node may determine, during operation, whether the first network node itself meets the first condition, and when determining that the first network node meets the first condition, the process of acquiring the predicted data output by the activated AI model and/or the actual data may be performed once.

In an embodiment of the present disclosure, when the predicted data is acquired by the first network node in response to the first condition being met, the actual data may be acquired in real time, so as to ensure that the corresponding actual data always exists when the predicted data is acquired. In addition, when the actual data is acquired by the first network node in response to the first condition being met, the predicted data may be acquired in real time, to ensure that the corresponding predicted data always exists when the actual data is acquired.

There may be multiple cases for the first condition, and the first condition is described in detail below.

In some implementations, the first condition may include that a measurement result of a radio channel measured by the first network node meets a second condition, where the measurement result of the radio channel includes at least one of RSRP, RSRQ, or SINR, and the second condition includes at least one of:
the measurement result of the radio channel is greater than a corresponding preset value;
the measurement result of the radio channel is less than a corresponding preset value; or
a deviation between the measurement result of the radio channel and a reference value is less than or equal to a corresponding preset value.

In an embodiment of the present disclosure, the measurement result of the radio channel may be set to at least one of RSRP, RSRQ or SINR as required, so that a preset value of at least one of RSRP, RSRQ or SINR may be correspondingly set. That is, when the measurement result of the radio channel includes the RSRP, the preset value corresponding to the measurement result of the radio channel is a preset RSRP value; when the measurement result of the radio channel includes the RSRQ, the preset value corresponding to the measurement result of the radio channel is a preset RSRQ value; and when the measurement result of the radio channel includes the SINR, the preset value corresponding to the measurement result of the radio channel is a preset SINR value.

In addition, it should be noted that, in some implementations, for the three conditions in which the measurement result of the radio channel is greater than the corresponding preset value, the measurement result of the radio channel is less than the corresponding preset value, and the deviation between the measurement result of the radio channel and the reference value is less than or equal to the corresponding preset value, the three preset values may be same or different, and the two reference values may be same or different.

In some implementations, in the case when the three preset values are different, the second condition in the above embodiment may include at least one of:
the measurement result of the radio channel is greater than a first preset value;
the measurement result of the radio channel is less than a second preset value; or
a deviation between the measurement result of the radio channel and a first reference value is less than or equal to a third preset value.

In an embodiment of the present disclosure, there may be multiple manners to determine that the second condition is met. Optionally, it may be determined that the second condition is met when the measurement result of the radio channel is greater than the first preset value. Optionally, it may also be determined that the second condition is met when the measurement result of the radio channel is less than the second preset value. Optionally, it may also be determined that the second condition is met when the deviation between the measurement result of the radio channel and the first reference value is less than or equal to the third preset value.

In some embodiments, the first condition may include that a distribution feature of the input data of the AI model meets a third condition, and the third condition includes at least one of the following, where the distribution feature includes at least one of a variance and an expectation of the input data of the AI model:
the distribution feature of the input data is equal to a corresponding preset value;
a deviation between the distribution feature of the input data and a reference value is less than a corresponding preset value; or
a deviation between the distribution feature of the input data and a reference value is greater than a corresponding preset value.

In an embodiment of the present disclosure, the distribution feature of the input data may be set as at least one of the variances or the expectation of the input data as required, so that a preset value of at least one of the variances and the expectation of the input data may be correspondingly set. That is, when the distribution feature of the input data includes the variance of the input data, the preset value corresponding to the distribution feature of the input data is a preset variance value of the input data, and when the distribution feature of the input data includes the expectation of the input data, the preset value corresponding to the distribution feature of the input data is a preset expectation value of the input data.

In addition, it should be noted that, in some implementations, for the three conditions in which the distribution feature of the input data is equal to the corresponding preset value, the deviation between the distribution feature of the input data and the reference value is less than the corresponding preset value, and the deviation between the distribution feature of the input data and the reference value is greater than the corresponding preset value, the three preset values may be same or different, and the two reference values may be same or different.

In some implementations, in the case when the three preset values are different and the two reference values are also different, the third condition mentioned above may include at least one of:
the expectation of the input data is equal to a fourth preset value;
the variance of the input data is equal to a fifth preset value;
a deviation between the expectation of the input data and a second reference value is less than a sixth preset value;
a deviation between the variance of the input data and a third reference value is less than a seventh preset value;
a deviation between the expectation of the input data and a fourth reference value is greater than an eighth preset value;
a deviation between the variance of the input data and a fifth reference value is greater than a ninth preset value.

In an embodiment of the present disclosure, there may be multiple manners to determine that the third condition is met.

In some embodiments, the third condition may be set as any one of the above determining manner according to actual needs. The first network node may acquire different batches of input data of the AI model, and further, optionally, may determine that the third condition is met when expectations of the different batches of input data are equal to the fourth preset value. Optionally, it may be determined that the third condition is met when variances of different batches of input data is equal to the fifth preset value. Optionally, it may be determined that the third condition is met when the deviation between expectations of the different batches of input data and the second reference value is less than the sixth preset value. Optionally, it may be determined that the third condition is met when a deviation between variances of the different batches of input data and the third reference value is less than the seventh preset value. Optionally, it may be determined that the third condition is met when a deviation between expectations of the different batches of input data and the fourth reference value is greater than the eighth preset value. Optionally, it may be determined that the third condition is met when a deviation between variances of the different batches of input data and the fifth reference value is greater than the ninth preset value.

In some embodiments, the third condition may be set as any two or more of the above according to actual needs. When the multiple determining manners are set, if different batches of input data meet the multiple determining manners at the same time, it may be determined that the third condition is met.

In some implementations, the different batches of input data in the embodiments of the present disclosure may be a preset number of data input into the AI model most recently, or data input into the AI model within a most recent preset time period.

It should be noted that the input data may include data in one or more dimensions, and when the input data includes data in multiple dimensions, the expectation of the input data may be an expectation of data in any one or more dimensions, and the variance of the input data may be a variance of data in any one or more dimensions. Further, when determining whether the third condition is met, one or more determined variances may be used for determining.

For example, the fourth preset value may include a sub-parameter corresponding to each expectation, so that the expectation of the data in each dimension is compared with the corresponding sub-parameter to determine whether the third condition is met.

When the expectation of the data of each dimension is compared with the corresponding sub-parameter to determine whether the third condition is met, the third condition may be determined to be met in response to determining that the expectation of data of any dimension is equal to the corresponding sub-parameter, or the third condition may be determined to be met in response to determining that the expectation of data of some or all dimensions is equal to the corresponding sub-parameter.

In some implementations, the first condition may include that a distribution feature of the predicted data of the AI model meets a fourth condition, and the fourth condition includes at least one of the following, where the distribution feature includes at least one of a variance and an expectation of the predicted data of the AI model:
the distribution feature of the predicted data is equal to a corresponding preset value;
a deviation between the distribution feature of the predicted data and a reference value is less than a corresponding preset value; or
a deviation between the distribution feature of the predicted data and a reference value is greater than a corresponding preset value.

In an embodiment of the present disclosure, the distribution feature of the predicted data may be set as at least one of the variances or the expectation of the predicted data as required, so that a preset value of at least one of the variances and the expectation of the predicted data may be correspondingly set. That is, when the distribution feature of the predicted data includes the variance of the predicted data, the preset value corresponding to the distribution feature of the predicted data is a preset variance value of the predicted data, and when the distribution feature of the predicted data includes the expectation of the predicted data, the preset value corresponding to the distribution feature of the predicted data is a preset expectation value of the predicted data.

In addition, it should be noted that, in some implementations, for the three conditions in which the distribution feature of the predicted data is equal to the corresponding preset value, the deviation between the distribution feature of the predicted data and the reference value is less than the corresponding preset value, and the deviation between the distribution feature of the predicted data and the reference value is greater than the corresponding preset value, the three preset values may be same or different, and the two reference values may be same or different.

In some implementations, in the case when the three preset values are different and the two reference values are also different, the third condition mentioned above may include at least one of:
the expectation of the predicted data is equal to a tenth preset value;
the variance of the predicted data is equal to an eleventh preset value;
a deviation between the expectation of the predicted data and a sixth reference value is less than a twelfth preset value;
a deviation between the variance of the predicted data and a seventh reference value is less than a thirteenth preset value;
a deviation between the expectation of the predicted data and an eighth reference value is greater than a fourteenth preset value; or
a deviation between the variance of the predicted data and a ninth reference value is greater than a fifteenth preset value.

In an embodiment of the present disclosure, there may be multiple manners to determine that the fourth condition is met.

In some embodiments, the third condition may be set as any one of the above determining manner according to actual needs. The first network node may acquire different batches of predicted data of the AI model, and further, optionally, may determine that the fourth condition is met when expectations of the different batches of predicted data are equal to the tenth preset value. Optionally, it may be determined that the fourth condition is met when variances of different batches of predicted data is equal to the eleventh preset value. Optionally, it may be determined that the fourth condition is met when the deviation between expectations of the different batches of predicted data and the sixth reference value is less than the twelfth preset value. Optionally, it may be determined that the fourth condition is met when the deviation between variances of the different batches of predicted data and the seventh reference value is less than the thirteenth preset value. Optionally, it may be determined that the fourth condition is met when the deviation between expectations of the different batches of predicted data and the eighth reference value is greater than the fourteenth preset value. Optionally, it may be determined that the fourth condition is met when the deviation between variances of the different batches of predicted data and the ninth reference value is greater than the fifteenth preset value.

In some embodiments, the fourth condition may be set as any two or more of the above according to actual needs. When the multiple determining manners are set, if different batches of predicted data meet the multiple determining manners at the same time, it may be determined that the fourth condition is met.

In some implementations, the different batches of predicted data in the embodiments of the present disclosure may be a second preset number of predicted data output by the AI model most recently, or predicted data output by the AI model within a most recent preset time period.

In some embodiments, in order to set the number of input data for calculation of the distribution feature, the input data may be a preset number of data input into the AI model most recently, or may be data input into the AI model within a most recent preset time period.

That is, in the embodiments of the present disclosure, by directly setting the number of the input data or controlling the time for acquiring the input data, the effect of controlling the number of the input data for calculation of the distribution feature can be achieved, thereby avoiding collecting a large amount of the input data for calculation of the distribution feature and reducing the calculation workload.

In some embodiments, in order to set the number of predicted data for calculation of the distribution feature, the predicted data may be a preset number of predicted data output by the AI model most recently, or may be predicted data output by the AI model within a most recent preset time period.

That is, in the embodiments of the present disclosure, by directly setting the number of the predicted data or controlling the time for acquiring the predicted data, the effect of controlling the number of the predicted data for calculation of the distribution feature can be achieved, thereby avoiding collecting a large amount of the predicted data for calculation of the distribution feature and reducing the calculation workload.

In the embodiment of the present disclosure, for the first condition, any one or more determining manners of the second condition, the third condition and the fourth condition can be set according to actual needs; when any determining manner is set, if the first network node meets the determining manner, it may be determined that the first network node meets the first condition; and when any multiple determining manners are set, if the first network node meets the multiple determining manners simultaneously, it may be determined that the first network node meets the first condition.

It should be noted that, in some implementations, a process of determining whether the first network node meets the first condition may be performed by the first network node, and in some other implementations, a process of determining whether the first network node meets the first condition may also be performed by the second network node.

In some implementations, the AI model is deployed in the first network node, and when the performance information indicates that the predicted data and the actual data meet the preset condition, the first network node deactivates the AI model.

In an embodiment of the present disclosure, the predicted data and the actual data meeting the preset condition may be understood as performance of the activated AI model does not meet a requirement for use, and in this case, the first network node may deactivate the AI model. The deactivation may be understood as a process of switching the activated AI model to an inactive state.

The preset condition met by the predicted data and the actual data is described in detail below.

In some implementations, the preset condition includes any one of:
the predicted data is inconsistent with the actual data;
an absolute difference between the predicted data and the actual data is greater than a preset threshold;
a count of occurrences, in which the predicted data is inconsistent with the actual data, is greater than or equal to a preset threshold; or
a count of occurrences, in which an absolute difference between the predicted data and the actual data is greater than a reference threshold, is greater than or equal to a preset threshold.

In an embodiment of the present disclosure, there may be multiple manners to determine that the preset condition is met.

In some embodiments, the preset condition may be set according to actual needs. Optionally, it may be determined that the preset condition is met when the predicted data is inconsistent with the actual data.

Optionally, it may be determined that the preset condition is met when an absolute difference between the predicted data and the actual data is greater than a preset threshold.

Optionally, it may be determined that the preset condition is met when a count of occurrences, in which the predicted data is inconsistent with the actual data, is greater than or equal to a preset threshold. In such manner, by analyzing the predicted data and the actual data for multiple times, and at last determining that the predicted data and the actual data meet the preset condition, the stability of performance monitoring of the AI model can be improved.

Optionally, it may be determined that the preset condition is met when a count of occurrences, in which the absolute difference between the predicted data and the actual data is greater than the reference threshold, is greater than or equal to the preset threshold. In such manner, by analyzing the predicted data and the actual data for multiple times, and at last determining that the predicted data and the actual data meet the preset condition, the stability of performance monitoring of the AI model can be improved.

In some implementations, the preset condition may further include:
a count value of a counter configured for the first network node is greater than or equal to a preset threshold;
where the counter adjusts the count value in one of following ways:
   in response to the predicted data being inconsistent with the actual data, incrementing the count value of the counter by 1, and in response to the predicted data being consistent with the actual data, keeping the count value of the counter unchanged;
   in response to the predicted data being inconsistent with the actual data, incrementing the count value of the counter by 1, and in response to the predicted data being consistent with the actual data, decrementing the count value of the counter by 1;
   in response to an absolute difference between the predicted data and the actual data being greater than a preset threshold, incrementing the count value of the counter by 1, and in response to the absolute difference between the predicted data and the actual data being less than or equal to the preset threshold, keeping the count value of the counter unchanged; or
   in response to an absolute difference between the predicted data and the actual data being greater than a preset threshold, incrementing the count value of the counter by 1, and in response to the absolute difference between the predicted data and the actual data being less than or equal to the preset threshold, decrementing the count value of the counter by 1.

In an embodiment of the present disclosure, a counter may be set in the first network node or the second network node, and the counter is configured to determine whether the preset condition is met, and when the count value of the counter is greater than or equal to the preset threshold, the preset condition is determined to be met.

In an embodiment of the present disclosure, the counter may operate in any one of the following manners, that is, the counter adjusts the count value by one of the following manners.

Optionally, the counting manner of the counter may include: each time the predicted data and the actual data are determined inconsistent, the count value is incremented by 1, and each time the predicted data and the actual data are determined consistent, the count value is kept unchanged.

Optionally, the counting manner of the counter may also include: each time the predicted data and the actual data are determined inconsistent, the count value is incremented by 1, and each time the predicted data and the actual data are determined consistent, the count value is decremented by 1.

Optionally, the counting manner of the counter may also include: each time the absolute difference between the predicted data and the actual data is determined greater than the preset threshold, the count value of the counter is incremented by 1, and each time the absolute difference between the predicted data and the actual data is determined less than or equal to the preset threshold, the count value of the counter is kept unchanged.

Optionally, the counting manner of the counter may also include: each time the absolute difference between the predicted data and the actual data is determined greater than the preset threshold, the count value of the counter is incremented by 1, and each time the absolute difference between the predicted data and the actual data is determined less than or equal to the preset threshold, the count value of the counter is decremented by 1.

In addition, to reuse the counter, in some embodiments, when the count value of the counter is greater than or equal to a preset threshold, the counter may be reset, and in this case, it may be further determined that the predicted data and the actual data meet the preset condition.

In such manner, by analyzing the predicted data and the actual data for multiple times, and at last determining that the predicted data and the actual data meet the preset condition, the stability of performance monitoring of the AI model can be improved.

It should be noted that the above-described counting manner of the counter may be performed by the device performing step S202.

In some implementations, the preset condition may further include:
a count value of a counter configured for the first network node is greater than or equal to a preset threshold;
where the counter adjusts the count value in one of following ways:
   in response to the predicted data being inconsistent with the actual data, incrementing the count value of the counter by 1 and starting or restarting a timer, where the counter resets the count value when a timing duration of the timer exceeds a preset duration or when the count value is greater than or equal to a preset threshold; or
   in response to an absolute difference between the predicted data and the actual data being greater than a preset threshold, incrementing the count value of the counter by 1 and starting or restarting a timer, where the counter resets the count value when a timing duration of the timer exceeds a preset duration or when the count value is greater than or equal to a preset threshold.

In an embodiment of the present disclosure, the counter may be set in the network node, and the counter is configured to determine whether the preset condition is met, and when the count value of the counter is greater than or equal to the preset threshold, the preset condition is determined to be met.

In an embodiment of the present disclosure, the counter may operate in any one of the following manners.

Optionally, a counting manner of the counter may include: each time the predicted data and the actual data are determined inconsistent, the count value of the counter is incremented by 1, and a timer is started or restarted, where the counter resets the count value when a timing duration of the timer exceeds a preset duration or when the count value is greater than or equal to a preset threshold.

In an embodiment of the present disclosure, given that the performance of the AI model may be considered acceptable if the preset condition is not continuously met within a period of time, in order to keep the AI model in the active state as much as possible, a timer can be set to time a duration after each time the predicted data is determined inconsistent with the actual data, and only if the predicted data is again determined inconsistent with the actual data within a timing duration, the count value of the timer is accumulated, and if the predicted data is not determined inconsistent with the actual data within the timing duration, the count value of the counter is reset. In addition, it should be noted that when the count value of the counter is greater than or equal to the preset threshold, the count value may also be reset.

Optionally, a counting manner of the counter may include: each time an absolute difference between the predicted data and the actual data is determined greater than a preset threshold, the count value of the counter is incremented by 1, and a timer is started or restarted, where the counter resets the count value when a timing duration of the timer exceeds a preset duration or when the count value is greater than or equal to a preset threshold.

In an embodiment of the present disclosure, given that the performance of the AI model may be considered acceptable if the preset condition is not continuously met within a period of time, in order to keep the AI model in the active state as much as possible, a timer can be set to time a duration after each time the predicted data is determined inconsistent with the actual data, and only if the predicted data is again determined inconsistent with the actual data within a timing duration, the count value of the timer is accumulated, and if the predicted data is not determined inconsistent with the actual data within the timing duration, the count value of the counter is reset. In addition, it should be noted that when the count value of the counter is greater than or equal to the preset threshold, the count value may also be reset.

Similarly, in order to keep the AI model in the active state as much as possible, a timer may be set to time a duration after each time the absolute difference between the predicted data and the actual data is determined greater than the preset threshold, only if the absolute difference between the predicted data and the actual data is again determined greater than the preset threshold within a timing duration, the count value of the timer is accumulated, and if the absolute difference between the predicted data and the actual data is not determined greater than the preset threshold within the timing duration, the count value of the counter is reset. In addition, it should be noted that when the count value of the counter is greater than or equal to the preset threshold, the count value may also be reset.

It should be noted that the above-described counting manner of the counter may be performed by the device performing step S202.

In some implementations, the preset condition may further include:
an accumulated value of a preset number of difference results is greater than a preset threshold, where each difference result is a difference between one piece of predicted data corresponding to the AI model and one piece of actual data.

In an embodiment of the present disclosure, the preset number of predicted data output by the AI model most recently and the actual data corresponding to each predicted data may be acquired, a difference result may be determined through each group of corresponding predicted data and actual data, and the preset condition may be determined to be met if the accumulated value of the preset number of difference results is greater than the preset threshold.

In addition, it should be noted that, in some implementations, the thresholds used in the preset condition may be same or different, and the reference thresholds may be same or different.

In an embodiment of the present disclosure, the predicted data and the actual data both correspond to a same type of data, i.e., data of a specific parameter type, for example, the specific parameter type may include at least one of: an identifier of a beam with best channel quality, RSRP of a beam with best channel quality, RSRQ of a beam with best channel quality, SINR of a beam with best channel quality, a geographical location of the first network node, RSRP measured by the first network node, RSRQ measured by the first network node, SINR measured by the first network node, a handover target cell status, a data arrival time, or a downlink data arrival status.

In some implementations, the performance information includes at least one of:
an identifier of a preset condition met by the predicted data and the actual data;
an identifier of the AI model meeting the preset condition; or
a difference between the predicted data and the actual data.

In some implementations, if the predicted data and the actual data meet the preset condition, an identifier of the preset condition that the predicted data and the actual data meet may be used as the performance information.

In some implementations, if the predicted data and the actual data meet the preset condition, an identifier of the AI model that meets the preset condition may be used as the performance information.

In some implementations, the difference between the predicted data and the actual data may also be directly used as the performance information.

It can be learned that the performance information of the AI model may be indicated by one or more of the identifiers of the preset condition that is met by the predicted data and the actual data, the identifier of the AI model that meets the preset condition, and the difference between the predicted data and the actual data. When the performance information carries any one of the identifier of the preset condition that the predicted data and the actual data meet and the identifier of the AI model that meets the preset condition, it may be determined that the predicted data and the actual data meet the preset condition, and when the performance information carries the difference between the predicted data and the actual data, it may be further determined, based on the difference, whether the predicted data and the actual data meet the preset condition.

In some embodiments, the first period, the preset value, the reference value, the preset threshold, the reference threshold, and the preset number are determined in any one of following ways:
determining according to a received instruction;
determining according to a protocol standard; or
determining according to self-stored configuration information.

In an embodiment of the present disclosure, the parameter values such as the first period, the preset value, the reference value, the preset threshold, the reference threshold, and the preset number used in the foregoing embodiments may be determined in various manners. Optionally, it may be determined by an instruction sent by the second network node. Optionally, it may be determined according to configuration information stored by the first network node. Optionally, it may be determined according to a protocol standard.

FIG. 3 is a flowchart of an AI model performance monitoring method according to an example embodiment, where the method is performed by a first network node deployed with an AI model, and as shown in FIG. 3, the method includes steps S301 and S302.

In step S301, the first network node acquires predicted data output by an activated AI model and actual data.

The predicted data and the actual data are data of a specific parameter type.

In step S302, the first network node determines performance information of the AI model based on the predicted data and the actual data.

The performance information of the AI model is used to determine a control instruction for controlling a state of the AI model.

For related implementations of step S301 and step S302 in the embodiments of the present disclosure, reference may be made to the above embodiments, and details will not be repeated herein.

According to the foregoing technical solution, the first network node acquires the predicted data corresponding to the activated AI model and the actual data, and determines the performance information of the AI model based on the predicted data and the actual data. It is proposed to monitor the performance of the AI model deployed in the communication system through the first network node, and a specific performance monitoring method is provided, so that the corresponding AI model in the first network node may be then deactivated according to the monitored performance of the AI model.

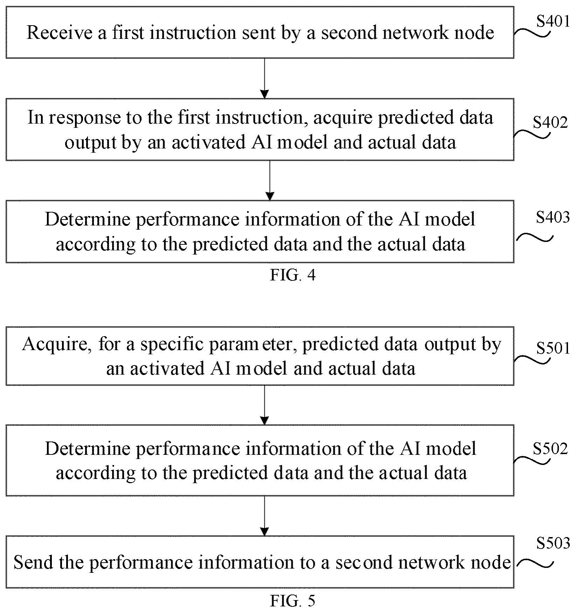

FIG. 4 is a flowchart of an AI model performance monitoring method according to an example embodiment, where the method is performed by a first network node deployed with an AI model, and as shown in FIG. 4, the method includes steps S401-S403.

In step S401, receiving a first instruction sent by a second network node.

In step S402, in response to the first instruction, acquiring predicted data output by an activated AI model and actual data.

The predicted data and the actual data are data of a specific parameter type.

In an embodiment of the present disclosure, the second network node may send the first instruction to the first network node, so that the first network node acquires the predicted data and the actual data when receiving the first instruction sent by the second network node.

In step S403, determining performance information of the AI model according to the predicted data and the actual data.

The performance information of the AI model is used to determine a control instruction for controlling a state of the AI model.

For related implementations of step S403 in the embodiments of the present disclosure, reference may be made to the above embodiments, and details will not be repeated herein.

FIG. 5 is a flowchart of an AI model performance monitoring method according to an example embodiment, where the method is performed by a first network node deployed with an AI model, and as shown in FIG. 5, the method includes steps S501-S503.

In step S501, acquiring, for a specific parameter, predicted data output by an activated AI model and actual data.

In step S502, determining performance information of the AI model according to the predicted data and the actual data.

The performance information of the AI model is used to determine a control instruction for controlling a state of the AI model.

For related implementations of step S501 and step S502 in the embodiments of the present disclosure, reference may be made to the above embodiments, and details will not be repeated herein.

In step S503, sending the performance information to a second network node.

In an embodiment of the present disclosure, after determining the performance information of the AI model, the first network node may send the performance information of the AI model to the second network node.

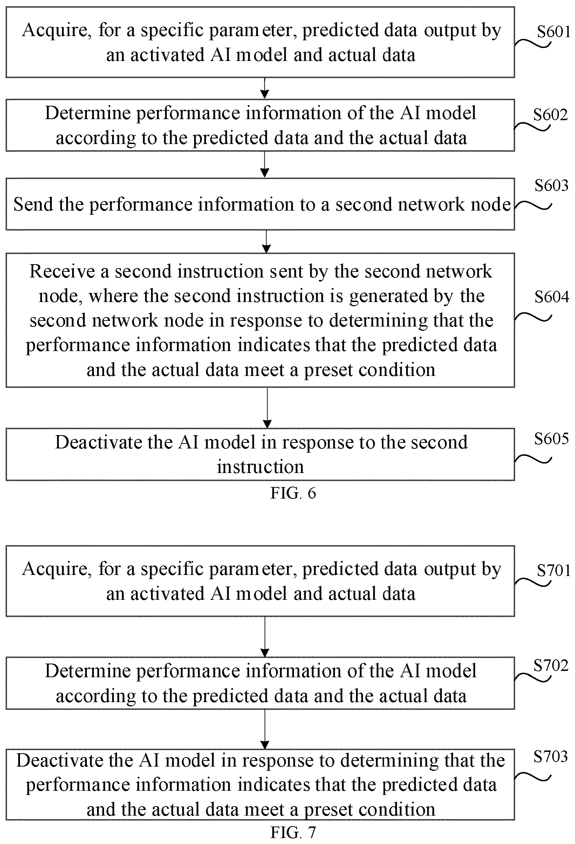

FIG. 6 is a flowchart of an AI model performance monitoring method according to an example embodiment, where the method is performed by a first network node deployed with an AI model, and as shown in FIG. 6, the method includes steps S601 and S605.

In step S601, acquiring, for a specific parameter, predicted data output by an activated AI model and actual data.

In step S602, determining performance information of the AI model according to the predicted data and the actual data.

The performance information of the AI model is used to determine a control instruction for controlling a state of the AI model.

In step S603, sending the performance information to a second network node.

For related implementations of steps S601-S603 in the embodiments of the present disclosure, reference may be made to the above embodiments, and details will not be repeated herein.

In step S604, receiving a second instruction sent by the second network node, where the second instruction is generated by the second network node in response to determining that the performance information indicates that the predicted data and the actual data meet a preset condition.

In step S605, deactivating the AI model in response to the second instruction.

In an embodiment of the present disclosure, after receiving the performance information, the second network node may generate the second instruction upon determining that the performance information indicates that the predicted data and the actual data meet the preset condition, and send the second instruction to the first network node, so that the first network node may deactivate the AI model according to the second instruction sent by the second network node.

FIG. 7 is a flowchart of an AI model performance monitoring method according to an example embodiment, where the method is performed by a first network node deployed with an AI model, and as shown in FIG. 7, the method includes steps S701 and S703.

In step 701, acquiring, for a specific parameter, predicted data output by an activated AI model and actual data.

In step S702, determining performance information of the AI model according to the predicted data and the actual data.

The performance information of the AI model is used to determine a control instruction for controlling a state of the AI model.

For related implementations of step S701 and step S702 in the embodiments of the present disclosure, reference may be made to the above embodiments, and details will not be repeated herein.

In step S703, deactivating the AI model in response to determining that the performance information indicates that the predicted data and the actual data meet a preset condition.

In an embodiment of the present disclosure, the first network node may determine whether the performance information indicates that the predicted data and the actual data meet the preset condition, and deactivate the AI model in a case that the preset condition is met.

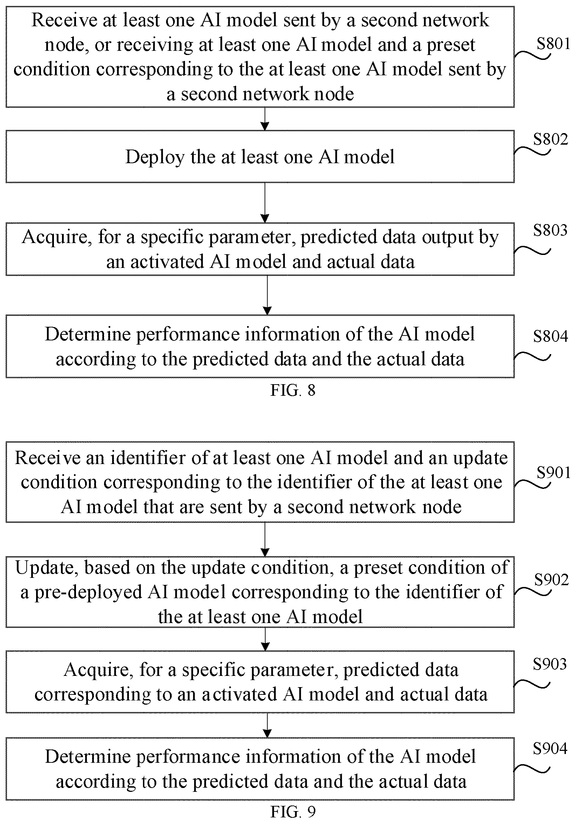

FIG. 8 is a flowchart of an AI model performance monitoring method according to an example embodiment, where the method is performed by a first network node deployed with an AI model, and as shown in FIG. 8, the method includes steps S801-S804.

In step S801, receiving at least one AI model sent by a second network node, or receiving at least one AI model and a preset condition corresponding to the at least one AI model sent by a second network node.

In step S802, deploying the at least one AI model.

In an embodiment of the present disclosure, the second network node may send the at least one AI model to the first network node, or the second network node may send the at least one AI model and the preset condition corresponding to the at least one AI model to the first network node, so that the first network node can deploy the at least one AI model.

That is, in an embodiment of the present disclosure, the AI model deployed by the first network node may come from the second network node, and the preset condition stored by the first network node may also come from the second network node.

In step S803, acquiring, for a specific parameter, predicted data output by an activated AI model and actual data.

In step S804, determining performance information of the AI model according to the predicted data and the actual data.

The performance information of the AI model is used to determine a control instruction for controlling a state of the AI model.

For related implementations of step S803 and S804 in the embodiments of the present disclosure, reference may be made to the above embodiments, and details will not be repeated herein.

FIG. 9 is a flowchart of an AI model performance monitoring method according to an example embodiment, where the method is performed by a first network node deployed with an AI model, and as shown in FIG. 9, the method includes steps S901-S904.

In step S901, receiving an identifier of at least one AI model and an update condition corresponding to the identifier of the at least one AI model that are sent by a second network node.

In step S902, updating, based on the update condition, a preset condition of a pre-deployed AI model corresponding to the identifier of the at least one AI model.

In an embodiment of the present disclosure, the second network node may send the identifier of the at least one AI model and the update condition corresponding to the identifier of the at least one AI model to the first network node, so that the first network node may update, based on the update condition, the preset condition of the pre-deployed AI model corresponding to the identifier of the at least one AI model.

That is, in an embodiment of the present disclosure, the second network node may instruct to update the pre-issued preset condition. Then, determining may be performed according to the updated preset condition.

In step S903, acquiring, for a specific parameter, predicted data corresponding to an activated AI model and actual data.

In step S904, determining performance information of the AI model according to the predicted data and the actual data.

The performance information of the AI model is used to determine a control instruction for controlling a state of the AI model.

For related implementations of step S903 and step S904 in the embodiments of the present disclosure, reference may be made to the above embodiments, and details will not be repeated herein.

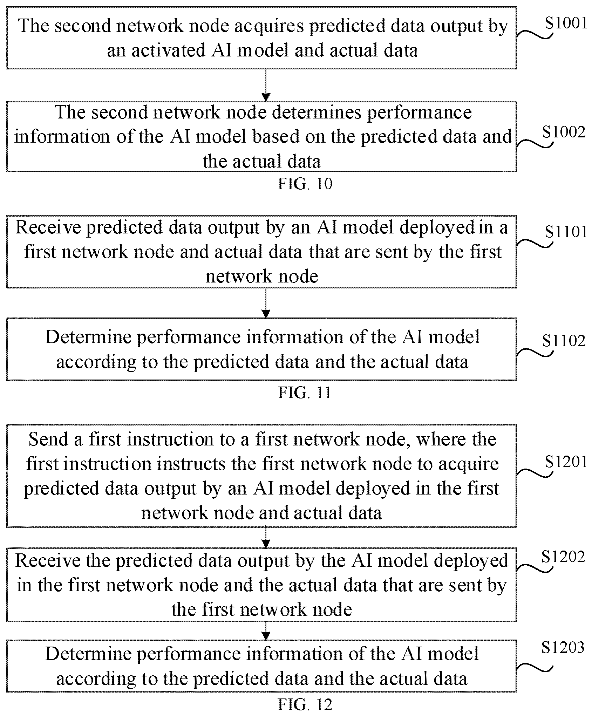

FIG. 10 is a flowchart of an AI model performance monitoring method according to an example embodiment, where the method is performed by a second network node, and as shown in FIG. 10, the method includes steps S1001 and S1002.

In step S1001, the second network node acquires predicted data output by an activated AI model and actual data.

The predicted data and the actual data are data of a specific parameter type.

In step S1002, the second network node determines performance information of the AI model based on the predicted data and the actual data.

The performance information of the AI model is used to determine a control instruction for controlling a state of the AI model.

According to the foregoing technical solution, the second network node acquires the predicted data output by the activated AI model and the actual data, and determines the performance information of the AI model based on the predicted data and the actual data. It is proposed to monitor the performance of the AI model deployed in the communication system through the second network node, and a specific performance monitoring method is provided, so that the corresponding AI model in the first network node may be then deactivated according to the monitored performance of the AI model.

FIG. 11 is a flowchart of an AI model performance monitoring method according to an example embodiment, where the method is performed by a second network node, and as shown in FIG. 11, the method includes steps S1101 and S1102.

In step S1101, receiving predicted data output by an AI model deployed in a first network node and actual data that are sent by the first network node.

The predicted data and the actual data are data of a specific parameter type.

In step S1102, determining performance information of the AI model according to the predicted data and the actual data.

The performance information of the AI model is used to determine a control instruction for controlling a state of the AI model.

In an embodiment of the present disclosure, the first network node may acquire the predicted data of the activated AI model deployed in the first network node and the actual data, and send the predicted data and the actual data to the second network node, so that the second network node may receive the predicted data of the AI model deployed in the first network node and the actual data that are sent by the first network node, and determine the performance information of the AI model according to the predicted data and the actual data.

According to the foregoing technical solution, the second network node receives the predicted data of the AI model deployed in the first network node and the actual data that are sent by the first network node, and determines the performance information of the AI model based on the predicted data and the actual data. It is proposed to monitor the performance of the AI model deployed in the communication system through the second network node, and a specific performance monitoring method is provided, so that the corresponding AI model in the first network node may be then deactivated according to the monitored performance of the AI model.

FIG. 12 is a flowchart of an AI model performance monitoring method according to an example embodiment, where the method is performed by a second network node, and as shown in FIG. 12, the method includes steps S1201-S1203.

In step S1201, sending a first instruction to a first network node, where the first instruction instructs the first network node to acquire predicted data output by an AI model deployed in the first network node and actual data.

In step S1202, receiving the predicted data output by the AI model deployed in the first network node and the actual data that are sent by the first network node.

The predicted data and the actual data are data of a specific parameter type.

In step S1203, determining performance information of the AI model according to the predicted data and the actual data.

The performance information of the AI model is used to determine a control instruction for controlling a state of the AI model.

For related implementations of step S1201 and step S1203 in the embodiments of the present disclosure, reference may be made to the above embodiments, and details will not be repeated herein.

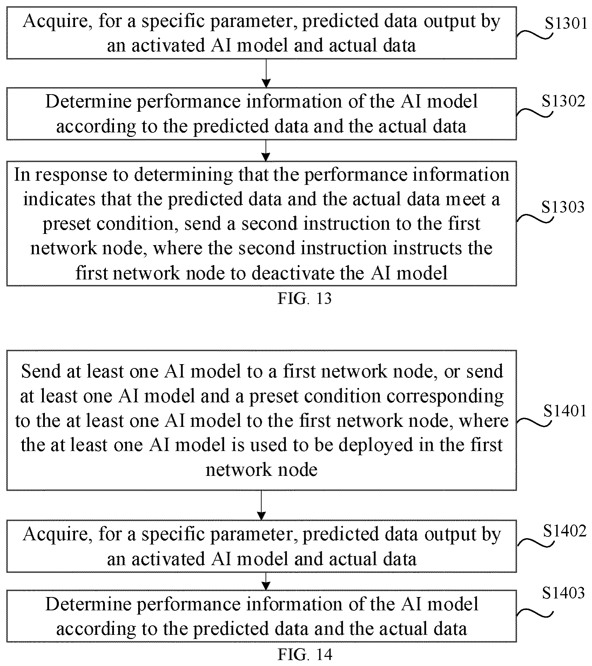

FIG. 13 is a flowchart of an AI model performance monitoring method according to an example embodiment, where the method is performed by a second network node, and the AI model is deployed in a first network node. As shown in FIG. 13, the method includes followings steps S1301-S1303.

In step S1301, acquiring, for a specific parameter, predicted data output by an activated AI model and actual data.

In step S1302, determining performance information of the AI model according to the predicted data and the actual data.

In step S1303, in response to determining that the performance information indicates that the predicted data and the actual data meet a preset condition, sending a second instruction to the first network node, where the second instruction instructs the first network node to deactivate the AI model.

For related implementations of step S1301 and step S1302 in the embodiments of the present disclosure, reference may be made to the above embodiments, and details will not be repeated herein.

FIG. 14 is a flowchart of an AI model performance monitoring method according to an example embodiment, where the method is performed by a second network node, and as shown in FIG. 14, the method includes steps S1401-S1403.

In step S1401, sending at least one AI model to a first network node, or sending at least one AI model and a preset condition corresponding to the at least one AI model to the first network node, where the at least one AI model is used to be deployed in the first network node.

In step S1402, acquiring, for a specific parameter, predicted data output by an activated AI model and actual data.

In step S1403, determining performance information of the AI model according to the predicted data and the actual data.

The performance information of the AI model is used to determine a control instruction for controlling a state of the AI model.

For related implementations of step S1401 and step S1403 in the embodiments of the present disclosure, reference may be made to the above embodiments, and details will not be repeated herein.

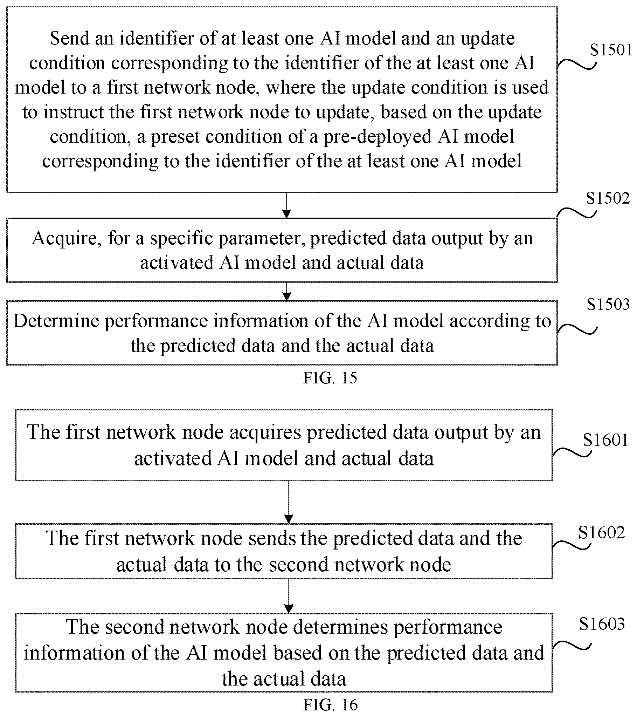

FIG. 15 is a flowchart of an AI model performance monitoring method according to an example embodiment, where the method is performed by a second network node, and as shown in FIG. 15, the method includes steps S1501 and S1503.

In step S1501, sending an identifier of at least one AI model and an update condition corresponding to the identifier of the at least one AI model to a first network node, where the update condition is used to instruct the first network node to update, based on the update condition, a preset condition of a pre-deployed AI model corresponding to the identifier of the at least one AI model.

In step S1502, acquiring, for a specific parameter, predicted data output by an activated AI model and actual data.

In step S1503, determining performance information of the AI model according to the predicted data and the actual data.

The performance information of the AI model is used to determine a control instruction for controlling a state of the AI model.

For related implementations of step S1501 and step S1503 in the embodiments of the present disclosure, reference may be made to the above embodiments, and details will not be repeated herein.

FIG. 16 is a flowchart of an AI model performance monitoring method according to an example embodiment, where the method is performed by a communication system including a first network node deployed with an AI model and a second network node, and as shown in FIG. 16, the method includes following steps S1601-S1603.

In step S1601, the first network node acquires predicted data output by an activated AI model and actual data.

The predicted data and the actual data are data of a specific parameter type.

In step S1602, the first network node sends the predicted data and the actual data to the second network node.

In step S1603, the second network node determines performance information of the AI model based on the predicted data and the actual data.

The performance information of the AI model is used to determine a control instruction for controlling a state of the AI model.

According to the foregoing technical solution, the first network node acquires the predicted data output by the activated AI model and the actual data, and sends the predicted data and the actual data to the second network node, so that the second network node can determine the performance information of the AI model based on the predicted data and the actual data. It is proposed to monitor the performance of the AI model deployed in the communication system through the first network node and the second network node, and a specific performance monitoring method is provided, so that the corresponding AI model in the first network node may be then deactivated according to the monitored performance of the AI model.

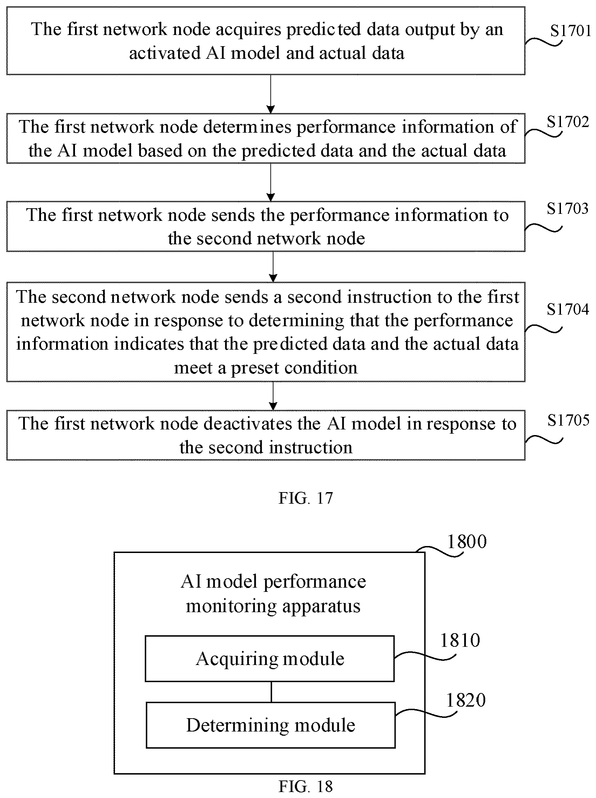

FIG. 17 is a flowchart of an AI model performance monitoring method according to an example embodiment, where the method is performed by a communication system including a first network node deployed with an AI model and a second network node, and as shown in FIG. 17, the method includes following steps S1701-S1705.

In step S1701, the first network node acquires predicted data output by an activated AI model and actual data.

The predicted data and the actual data are data of a specific parameter type.

In some implementations, the predicted data and the actual data are periodically acquired by the first network node based on a first period.

In some implementations, the predicted data and the actual data are acquired by the first network node in response to meeting a first condition.

In some implementations, the predicted data and the actual data are acquired by the first network node in response to a first instruction after the first network node receives the first instruction sent by the second network node.

In step S1702, the first network node determines performance information of the AI model based on the predicted data and the actual data.

In step S1703, the first network node sends the performance information to the second network node.

In step S1704, the second network node sends a second instruction to the first network node in response to determining that the performance information indicates that the predicted data and the actual data meet a preset condition.

In step S1705, the first network node deactivates the AI model in response to the second instruction.

FIG. 18 is a block diagram of an AI model performance monitoring apparatus according to an example embodiment. Referring to FIG. 18, the apparatus 1800 includes: an acquiring module 1810 and a determining module 1820.

The acquiring module 1801 is configured to acquire, for a specific parameter, predicted data output by an activated AI model and actual data.

The determining module 1802 is configured to determine performance information of the AI model according to the predicted data and the actual data, where the performance information of the AI model is used to determine a control instruction for controlling a state of the AI model.

Optionally, the AI model is deployed in the first network node, and the predicted data and/or the actual data are/is periodically acquired by the first network node based on a first period.

Optionally, the AI model is deployed in the first network node, and the predicted data and/or the actual data are/is acquired by the first network node in response to meeting a first condition.

Optionally, the first condition includes that a measurement result of a radio channel measured by the first network node meets a second condition, where the measurement result of the radio channel includes at least one of reference signal receiving power (RSRP), reference signal receiving quality (RSRQ), or signal to interference plus noise ratio (SINR), and the second condition includes at least one of:
the measurement result of the radio channel is greater than a corresponding preset value;
the measurement result of the radio channel is less than a corresponding preset value; or
a deviation between the measurement result of the radio channel and a reference value is less than or equal to a corresponding preset value.

Optionally, the first condition includes that a distribution feature of input data of the AI model meets a third condition, where the third condition includes at least one of the following, and the distribution feature includes at least one of a variance and an expectation of the input data of the AI model:
the distribution feature of the input data is equal to a corresponding preset value;
a deviation between the distribution feature of the input data and a reference value is less than a corresponding preset value; or
a deviation between the distribution feature of the input data and a reference value is greater than a corresponding preset value.

Optionally, the input data is a preset number of data most recently input into the AI model, or data input into the AI model within a most recent preset time period.

Optionally, the first condition includes that a distribution feature of the predicted data of the AI model meets a fourth condition, where the fourth condition includes at least one of the following, and the distribution feature includes at least one of a variance and an expectation of the predicted data of the AI model:
the distribution feature of the predicted data is equal to a corresponding preset value;
a deviation between the distribution feature of the predicted data and a reference value is less than a corresponding preset value; or
a deviation between the distribution feature of the predicted data and a reference value is greater than a corresponding preset value.

Optionally, the predicted data is a preset number of data output by the AI model most recently, or predicted data output by the AI model within a most recent preset time period.

Optionally, the AI model is deployed in a first network node, and when the performance information indicates that the predicted data and the actual data meet a preset condition, the first network node deactivates the AI model.

Optionally, the preset condition includes any one of:
the predicted data is inconsistent with the actual data;
an absolute difference between the predicted data and the actual data is greater than a preset threshold;
a count of occurrences, in which the predicted data is inconsistent with the actual data, is greater than or equal to a preset threshold; or
a count of occurrences, in which an absolute difference between the predicted data and the actual data is greater than a reference threshold, is greater than or equal to a preset threshold.

Optionally, the preset condition includes:
a count value of a counter is greater than or equal to a preset threshold.

A counting manner of the counter includes any one of:
in response to the predicted data being inconsistent with the actual data, incrementing the count value of the counter by 1, and in response to the predicted data being consistent with the actual data, keeping the count value of the counter unchanged;
in response to the predicted data being inconsistent with the actual data, incrementing the count value of the counter by 1, and in response to the predicted data being consistent with the actual data, decrementing the count value of the counter by 1;
in response to an absolute difference between the predicted data and the actual data being greater than a preset threshold, incrementing the count value of the counter by 1, and in response to the absolute difference between the predicted data and the actual data being less than or equal to the preset threshold, keeping the count value of the counter unchanged; or
in response to an absolute difference between the predicted data and the actual data being greater than a preset threshold, incrementing the count value of the counter by 1, and in response to the absolute difference between the predicted data and the actual data being less than or equal to the preset threshold, decrementing the count value of the counter by 1.

Optionally, the preset condition includes:
a count value of a counter is greater than or equal to a preset threshold.

A counting manner of the counter includes any one of:
in response to the predicted data being inconsistent with the actual data, incrementing the count value of the counter by 1 and starting or restarting a timer, where the counter resets the count value when a timing duration of the timer exceeds a preset duration or when the count value is greater than or equal to a seventh threshold; or
in response to an absolute difference between the predicted data and the actual data being greater than a preset threshold, incrementing the count value of the counter by 1 and starting or restarting a timer, where the counter resets the count value when a timing duration of the timer exceeds a preset duration or when the count value is greater than or equal to a preset threshold.

Optionally, the preset condition includes:
an accumulated value of a preset number of difference results is greater than a preset threshold, where each difference result is a difference between one piece of predicted data corresponding to the AI model and one piece of actual data.

Optionally, the first period, the preset value, the reference value, the preset threshold, the reference threshold, and the preset number are determined in any one of following ways:
determining according to a received instruction;
determining according to a protocol standard; or
determining according to self-stored configuration information.

Optionally, the specific parameter includes at least one of following parameter types: an identifier of a beam with best channel quality, RSRP of a beam with best channel quality, RSRQ of a beam with best channel quality, SINR of a beam with best channel quality, a geographical location of the first network node, RSRP measured by the first network node, RSRQ measured by the first network node, SINR measured by the first network node, a handover target cell status, a data arrival time, or a downlink data arrival status.

Optionally, the performance information includes at least one of:
an identifier of a preset condition met by the predicted data and the actual data;
an identifier of the AI model meeting the preset condition; or
a difference between the predicted data and the actual data.

Optionally, the apparatus is applied to a first network node deployed with the AI model, and the acquiring module is further configured to: receive a first instruction sent by a second network node; and acquire the predicted data and the actual data in response to the first instruction.

Optionally, the apparatus is applied to a first network node deployed with the AI model, and the apparatus 1800 further includes:
a first sending module, configured to send the performance information to a second network node.

Optionally, the apparatus is applied to a first network node deployed with the AI model, and the apparatus 1800 further includes:
a first receiving module, configured to receive a second instruction sent by a second network node, where the second instruction is generated by the second network node in response to determining that the performance information indicates that the predicted data and the actual data meet a preset condition;
a first deactivating module, configured to deactivate the AI model in response to the second instruction.

Optionally, the apparatus is applied to a first network node deployed with the AI model, and the apparatus 1800 further includes:
a second deactivating module, configured to deactivate the AI model in response to determining that the performance information indicates that the predicted data and the actual data meet a preset condition.

Optionally, the apparatus is applied to a first network node deployed with the AI model, and the apparatus 1800 further includes:
a second receiving module, configured to receive at least one AI model sent by a second network node, or receiving at least one AI model and a preset condition corresponding to the at least one AI model sent by a second network node; and
a deploying module, configured to deploy the at least one AI model.

Optionally, the apparatus is applied to a first network node deployed with the AI model, and the apparatus 1800 further includes:
a third receiving module, configured to receive an identifier of at least one AI model and an update condition corresponding to the identifier of the at least one AI model that are sent by a second network node; and
an updating module, configured to update, based on the update condition, a preset condition of a pre-deployed AI model corresponding to the identifier of the at least one AI model.

Optionally, the apparatus is applied to a second network node, and the acquiring module is further configured to: receive predicted data output by an AI model deployed in a first network node and actual data that are sent by the first network node.

Optionally, the apparatus is applied to a second network node, and the apparatus 1800 further includes:
a second sending module, configured to send a first instruction to the first network node, where the first instruction instructs the first network node to acquire the predicted data output by the AI model deployed in the first network node and the actual data.

Optionally, the apparatus is applied to a second network node, the AI model is deployed in a first network node, and the apparatus 1800 further includes:
a third sending module, configured to: in response to determining that the performance information indicates that the predicted data and the actual data meet a preset condition, send a second instruction to the first network node, where the second instruction instructs the first network node to deactivate the AI model.

Optionally, the apparatus is applied to a second network node, and the apparatus 1800 further includes:
a fourth sending module, configured to send at least one AI model to a first network node, or send at least one AI model and a preset condition corresponding to the at least one AI model to the first network node, where the at least one AI model is used to be deployed in the first network node.

Optionally, the apparatus is applied to a second network node, and the apparatus 1800 further includes:
a fifth sending module, configured to send an identifier of at least one AI model and an update condition corresponding to the identifier of the at least one AI model to a first network node, where the update condition is used to instruct the first network node to update, based on the update condition, a preset condition of a pre-deployed AI model corresponding to the identifier of the at least one AI model.

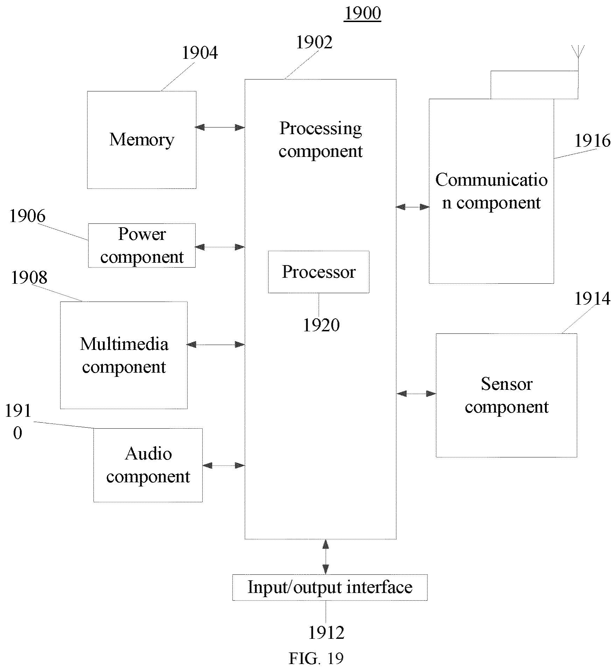

FIG. 19 is a block diagram of a network node 1900 according to an example embodiment. Referring to FIG. 19, the network node 1900 may include one or more of the following components: a processing component 1902, a memory 1904, a power component 1906, a multimedia component 1908, an audio component 1910, an input/output interface 1912, a sensor component 1914, and a communication component 1916.

The processing component 1902 typically controls overall operations of the network node 1900, such as the operations associated with display, telephone calls, data communications, camera operations, and recording operations. The processing component 1902 may include one or more processors 1920 to execute instructions to complete all or part of the steps of the latency measurement method. Moreover, the processing component 1902 may include one or more modules which facilitate the interaction between the processing component 1902 and other components. For example, the processing component 1902 may include a multimedia module to facilitate the interaction between the multimedia component 1908 and the processing component 1902.

The memory 1904 is configured to store various types of data to support the operation of the network node 1900. Examples of such data include instructions for any applications or methods operated on the network node 1900, contact data, phonebook data, messages, pictures, video, etc. The memory 1904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1906 provides power to various components of the network node 1900. The power component 1906 may include a power management system, one or more power sources, and any other components associated with the generation, management, and distribution of power in the network node 1900.

The multimedia component 1908 includes a screen providing an output interface between the network node 1900 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and pressure associated with the touch or slide operation. In some embodiments, the multimedia component 1908 includes a front camera and/or a rear camera. The front camera and the rear camera may receive an external multimedia datum while the network node 1900 is in an operation mode, such as a photographing mode or a video mode. Each of the front camera and the rear camera may be a fixed optical lens system or have focal length and optical zoom capability.

The audio component 1910 is configured to output and/or input audio signals. For example, the audio component 1910 includes a microphone (MIC) configured to receive an external audio signal when the network node 1900 is in an operation mode, such as a call mode, a recording mode, and a voice recognition mode. The received audio signal may be further stored in the memory 1904 or transmitted via the communication component 1916. In some embodiments, the audio component 1910 further includes a speaker to output audio signals.

The input/output interface 1912 provides an interface between the processing component 1902 and peripheral interface modules, such as a keyboard, a click wheel, buttons, and the like. These buttons may include, but are not limited to, home buttons, volume buttons, start buttons, and lock buttons.

The sensor component 1914 includes one or more sensors to provide status assessments of various aspects of the network node 1900. For instance, the sensor component 1914 may detect an on/off status of the network node 1900, relative positioning of components, e.g., the display and the keypad, of the network node 1900, a change in position of the network node 1900 or a component of the network node 1900, a presence or absence of user contact with the network node 1900, an orientation or an acceleration/deceleration of the network node 1900, and a change in temperature of the network node 1900. The sensor component 1914 may include a proximity sensor configured to detect the presence of nearby objects without requiring any physical contact. The sensor component 1914 may also include a light sensor, such as a CMOS or CCD image sensor, for use in imaging applications. In some embodiments, the sensor component 1914 may also include an accelerometer sensor, a gyroscope sensor, a magnetic sensor, a pressure sensor, or a temperature sensor.

The communication component 1916 is configured to facilitate communication, wired or wirelessly, between the network node 1900 and other devices. The network node 1900 can access a wireless network based on a communication standard, such as WiFi, 2G or 3G, or a combination thereof. In an example embodiment, the communication component 1916 receives a broadcast signal or broadcast associated information from an external broadcast management system via a broadcast channel. In an example embodiment, the communication component 1916 further includes a near field communication (NFC) module to facilitate short-range communication. For example, NFC modules may be implemented based on radio frequency identification (RFID) technology, infrared data association (IrDA) technology, ultra-wideband (UWB) technology, Bluetooth (BT) technology, and other technologies.

In an example embodiment, the network node 1900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above AI model performance monitoring method.

In example embodiments, there is also provided a non-transitory computer-readable storage medium including instructions, such as included in the memory 1904, executable by the processor 1920 in the network node 1900, for performing the latency measurement method. For example, the non-transitory computer-readable storage medium may be a ROM (read-only memory), a RAM (random access memory), CD-ROM (compact disc read-only memory), magnetic tape, floppy disk, optical data storage device, or the like.

The above network node may be, in addition to an independent device, a part of the independent device. For example, in an embodiment, the network node may be an integrated circuit (IC) or a chip, where the integrated circuit may be a single IC, or may be a set of ICs; and the chip may include but is not limited to the following types: a graphics processing unit (GPU), a central processing unit (CPU), a field programmable gate array (FPGA), a digital signal processor (DSP), an application specific integrated circuit (ASIC), a system on chip (SOC), or a system on chip (SoC). The integrated circuit or the chip may be configured to execute an executable instruction (or code), to implement the foregoing AI model performance monitoring method. The executable instructions may be stored in the integrated circuit or chip, or may be obtained from another apparatus or device, for example, the integrated circuit or chip includes a processor, a memory, and an interface configured to communicate with another apparatus. The executable instruction may be stored in the processor, and when the executable instruction is executed by the processor, the foregoing AI model performance monitoring method is implemented; or the integrated circuit or chip may receive an executable instruction through the interface and transmit the executable instruction to the processor for execution, to implement the foregoing AI model performance monitoring method.

In another example embodiment, a computer program product is further provided, the computer program product including a computer program executable by a programmable apparatus, the computer program having code portions for performing the above AI model performance monitoring method when executed by the programmable apparatus.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including such departures from the present disclosure as come within known or customary practice in the art. It is intended that the specification and examples be considered as examples only, with a true scope and spirit of the disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. An artificial intelligence (AI) model performance monitoring method, comprising:
acquiring, for a specific parameter, predicted data output by an activated AI model and actual data; and
determining performance information of the AI model according to the predicted data and the actual data, wherein the performance information of the AI model is used to determine a control instruction for controlling a state of the AI model.

2. The method according to claim 1, wherein the AI model is deployed in a first network node, and at least one of the predicted data or the actual data is periodically acquired by the first network node based on a first period.

3. The method according to claim 1, wherein the AI model is deployed in a first network node, and at least one of the predicted data or the actual data is acquired by the first network node in response to meeting a first condition.

4. The method according to claim 3, wherein the first condition comprises that a measurement result of a radio channel measured by the first network node meets a second condition, wherein the measurement result of the radio channel comprises at least one of reference signal receiving power (RSRP), reference signal receiving quality (RSRQ), or signal to interference plus noise ratio (SINR), and the second condition comprises at least one of:
the measurement result of the radio channel is greater than a corresponding preset value;
the measurement result of the radio channel is less than a corresponding preset value; or
a deviation between the measurement result of the radio channel and a reference value is less than or equal to a corresponding preset value.

5. The method according to claim 3, wherein the first condition comprises that a distribution feature of input data of the AI model meets a third condition, wherein the third condition comprises at least one of the following, and the distribution feature comprises at least one of a variance and an expectation of the input data of the AI model:
the distribution feature of the input data is equal to a corresponding preset value;
a deviation between the distribution feature of the input data and a reference value is less than a corresponding preset value; or
a deviation between the distribution feature of the input data and a reference value is greater than a corresponding preset value.

6. The method according to claim 5, wherein
the input data is a preset number of data most recently input into the AI model, or data input into the AI model within a most recent preset time period.

7. The method according to claim 3, wherein the first condition comprises that a distribution feature of the predicted data of the AI model meets a fourth condition, wherein the fourth condition comprises at least one of the following, and the distribution feature comprises at least one of a variance and an expectation of the predicted data of the AI model:
the distribution feature of the predicted data is equal to a corresponding preset value;
a deviation between the distribution feature of the predicted data and a reference value is less than a corresponding preset value; or
a deviation between the distribution feature of the predicted data and a reference value is greater than a corresponding preset value.

8. The method according to claim 7, wherein
the predicted data is a preset number of data output by the AI model most recently, or predicted data output by the AI model within a most recent preset time period.

9. The method according to claim 1, wherein the AI model is deployed in a first network node, and when the performance information indicates that the predicted data and the actual data meet a preset condition, the first network node deactivates the AI model.

10. The method according to claim 9, wherein the preset condition comprises at least one of:
the predicted data is inconsistent with the actual data;
an absolute difference between the predicted data and the actual data is greater than a preset threshold;
a count of occurrences, in which the predicted data is inconsistent with the actual data, is greater than or equal to a preset threshold; or
a count of occurrences, in which an absolute difference between the predicted data and the actual data is greater than a reference threshold, is greater than or equal to a preset threshold.

11. The method according to claim 9, wherein the preset condition comprises:
a count value of a counter configured for the first network node is greater than or equal to a preset threshold;
wherein the counter adjusts the count value in one of following ways:
in response to the predicted data being inconsistent with the actual data, incrementing the count value of the counter by 1, and in response to the predicted data being consistent with the actual data, keeping the count value of the counter unchanged;
in response to the predicted data being inconsistent with the actual data, incrementing the count value of the counter by 1, and in response to the predicted data being consistent with the actual data, decrementing the count value of the counter by 1;
in response to an absolute difference between the predicted data and the actual data being greater than a preset threshold, incrementing the count value of the counter by 1, and in response to the absolute difference between the predicted data and the actual data being less than or equal to the preset threshold, keeping the count value of the counter unchanged; or
in response to an absolute difference between the predicted data and the actual data being greater than a preset threshold, incrementing the count value of the counter by 1, and in response to the absolute difference between the predicted data and the actual data being less than or equal to the preset threshold, decrementing the count value of the counter by 1.

12. The method according to claim 9, wherein the preset condition comprises:
a count value of a counter configured for the first network node is greater than or equal to a preset threshold;
wherein the counter adjusts the count value in one of following ways:
in response to the predicted data being inconsistent with the actual data, incrementing the count value of the counter by 1 and starting or restarting a timer, wherein the counter resets the count value when a timing duration of the timer exceeds a preset duration or when the count value is greater than or equal to a seventh threshold; or
in response to an absolute difference between the predicted data and the actual data being greater than a preset threshold, incrementing the count value of the counter by 1 and starting or restarting a timer, wherein the counter resets the count value when a timing duration of the timer exceeds a preset duration or when the count value is greater than or equal to a preset threshold.

13. The method according to claim 9, wherein the preset condition comprises:
an accumulated value of a preset number of difference results is greater than a preset threshold, wherein each difference result is a difference between one piece of predicted data corresponding to the AI model and one piece of actual data.

14. The method according to claim 1, wherein the first period, the preset value, the reference value, the preset threshold, the reference threshold, and the preset number are determined in any one of following ways:
determining according to a received instruction;
determining according to a protocol standard; or
determining according to self-stored configuration information.

15. The method according to any one of claims 1-14, wherein the specific parameter comprises at least one of following parameter types: an identifier of a beam with best channel quality, RSRP of a beam with best channel quality, RSRQ of a beam with best channel quality, SINR of a beam with best channel quality, a geographical location of the first network node, RSRP measured by the first network node, RSRQ measured by the first network node, SINR measured by the first network node, a handover target cell status, a data arrival time, or a downlink data arrival status.

16. The method according to any one of claims 1-15, wherein the performance information comprises at least one of:
an identifier of a preset condition met by the predicted data and the actual data;
an identifier of the AI model meeting the preset condition; or
a difference between the predicted data and the actual data.

17. The method according to any one of claims 1-16, wherein the method is performed by a first network node deployed with the AI model, and acquiring the predicted data output by the activated AI model and the actual data comprises:
Receiving a first instruction sent by a second network node; and
Acquiring the predicted data and the actual data in response to the first instruction.

18. The method according to any one of claims 1-16, wherein the method is performed by a first network node deployed with the AI model, and the method further comprises:
sending the performance information to a second network node.

19. The method according to claim 18, further comprising:
receiving a second instruction sent by the second network node, wherein the second instruction is generated by the second network node in response to determining that the performance information indicates that the predicted data and the actual data meet a preset condition; and
deactivating the AI model in response to the second instruction.

20. The method according to any one of claims 1-16, wherein the method is performed by a first network node deployed with the AI model, and the method further comprises:
Deactivating the AI model in response to determining that the performance information indicates that the predicted data and the actual data meet a preset condition.

21. The method according to any one of claims 1-16, wherein the method is performed by a first network node deployed with the AI model, and the method further comprises:
Receiving at least one AI model sent by a second network node, or receiving at least one AI model and a preset condition corresponding to the at least one AI model sent by a second network node; and
Deploying the at least one AI model.

22. The method according to any one of claims 1-16, wherein the method is performed by a first network node deployed with the AI model, and the method further comprises:
Receiving an identifier of at least one AI model and an update condition corresponding to the identifier of the at least one AI model that are sent by a second network node; and
Updating, based on the update condition, a preset condition of a pre-deployed AI model corresponding to the identifier of the at least one AI model.

23. The method according to any one of claims 1-16, wherein the method is performed by a second network node, and acquiring the predicted data output by the activated AI model and the actual data comprises:
receiving the predicted data output by the AI model deployed in a first network node and the actual data that are sent by the first network node.

24. The method according to claim 23, wherein the method is performed by the second network node, wherein before receiving the predicted data output by the AI model deployed in the first network node and the actual data that are sent by the first network node, the method further comprises:
sending a first instruction to the first network node, wherein the first instruction instructs the first network node to acquire the predicted data output by the AI model deployed in the first network node and the actual data.

25. The method according to any one of claims 1-16, wherein the method is performed by a second network node, the AI model is deployed in a first network node, and after determining the performance information of the AI model according to the predicted data and the actual data, the method further comprises:
in response to determining that the performance information indicates that the predicted data and the actual data meet a preset condition, sending a second instruction to the first network node, wherein the second instruction instructs the first network node to deactivate the AI model.

26. The method according to any one of claims 1-16, wherein the method is performed by a second network node, and the method further comprises:
sending at least one AI model to a first network node, or sending at least one AI model and a preset condition corresponding to the at least one AI model to the first network node, wherein the at least one AI model is used to be deployed in the first network node.

27. The method according to any one of claims 1-16, wherein the method is performed by a second network node, and the method further comprises:
sending an identifier of at least one AI model and an update condition corresponding to the identifier of the at least one AI model to a first network node, wherein the update condition is used to instruct the first network node to update, based on the update condition, a preset condition of a pre-deployed AI model corresponding to the identifier of the at least one AI model.

28. An artificial intelligence (AI) model performance monitoring apparatus, comprising:
an acquiring module, configured to acquire, for a specific parameter, predicted data output by an activated AI model and actual data; and
a determining module, configured to determine performance information of the AI model according to the predicted data and the actual data, wherein the performance information of the AI model is used to determine a control instruction for controlling a state of the AI model.

29. A network node, comprising:
one or more processor;
a memory for storing a processor-executable instruction;
wherein the one or more processor is configured to execute the executable instruction to implement steps of the method according to any one of claims 1-16.

30. A computer-readable storage medium, storing a computer program instruction, wherein when the program instruction is executed by one or more processor, steps of the method according to any one of claims 1-16 is implemented, or steps of the method according to any one of claims 17-22 is implemented, or steps of the method according to any one of claims 23-27 is implemented.
